# EUROPEAN PATENT APPLICATION

(11) **EP 4 407 755 A2**
(43) Date of publication of application: **31.07.2024**
(21) Application number: 23208279.2
(22) Date of filing: 07.11.2023
(51) Int. Cl.: H01M 10/6557, H01M 10/613, H01M 10/625, H01M 10/658, H01M 50/209, H01M 50/224, H01M 50/358, H01M 50/507, H01M 50/30, H01M 50/553

(54) **BATTERY PACK**

(30) Priority: 07.11.2022 US 202263423438 P; 21.07.2023 KR 20230095336
(71) Applicant: Samsung SDI Co., Ltd., Yongin-si, Gyeonggi-do 17084 (KR)
(72) Inventor: KIM, Dong Hyeong, 17084 Yongin-si (KR); KIM, Myung Chul, 17084 Yongin-si (KR); JEON, Du Seong, 17084 Yongin-si (KR); KIM, Jeong Ho, 17084 Yongin-si (KR)
(74) Representative: Marks & Clerk LLP

(57) **Abstract**

The present disclosure relates to a battery pack capable of reducing heat propagation to neighboring cells when an event occurs in a specific battery cell. In an example embodiment, a battery pack includes: a plurality of battery cells; a heat shielding member covering a side of a battery cell of the plurality of battery cells where a vent is formed; and a rigid member coupled to an outer surface of the heat shielding member, and the rigid member includes an opening hole corresponding to the vent.

## Description

### BACKGROUND

### 1. Field

Aspects of embodiments of the present disclosure relate to a battery pack.

### 2. Description of the Related Art

Unlike a primary battery that cannot be charged, a secondary battery is a battery that can be charged and discharged. Low-capacity secondary batteries packaged in the form of a pack including a single battery cell are widely employed in portable small-sized electronic devices, such as cellular phones or camcorders. In addition, large-capacity secondary batteries packaged in forms of battery packs including tens of battery cells, for example, connected to one another are widely used for driving motors of hybrid vehicles or electric vehicles.

A secondary battery may be constructed by incorporating an electrode assembly and an electrolyte in a case with a separator interposed between a positive electrode plate and a negative electrode plate, and installing a cap plate to the case. Here, representative examples of electrode assemblies include a wound type or a stack type. The electrode assembly may have an electrode tab protruding upwardly or laterally, and a current collector plate may be connected to the electrode tab.

These secondary batteries have recently been applied to high-output products, such as electric vehicles and ESS systems. In addition, to produce the output required for a product, secondary batteries may be applied to the product in the form of a battery pack consisting of a plurality of battery cells.

The above information disclosed in this Background section is provided for enhancement of understanding of the background of the disclosure and, therefore, it may contain information that does not constitute prior art.

### SUMMARY

According to an aspect of embodiments of the present disclosure, a battery pack capable of reducing heat propagation to neighboring cells when an event occurs in a specific battery cell is provided.

According to one or more embodiments of the present disclosure, a battery pack includes: a plurality of battery cells; a heat shielding member covering a side of a battery cell of the plurality of battery cells where a vent is formed; and a rigid member coupled to an outer surface of the heat shielding member, wherein the rigid member comprises an opening hole corresponding to the vent.

In one or more embodiments, the heat shielding member may be exposed to an outside through the opening hole of the rigid member.

In one or more embodiments, the battery pack may further include a support member or a housing corresponding to a surface of the battery cell where the vent is formed, and a flow path may be defined inside the support member or the housing.

In one or more embodiments, the support member may include steps inside to define the flow path.

In one or more embodiments, the flow path may be defined along at least two directions.

In one or more embodiments, the flow path may include a first flow path and a second flow path perpendicular to each other.

In one or more embodiments, the heat shielding member may include mica.

In one or more embodiments, the rigid member may include steel or aluminium.

In one or more embodiments, the battery pack may further include: a plurality of bus bars coupling electrode terminals of the battery cells; and an insulating cover covering the bus bars at an outside of the bus bars.

In one or more embodiments, the battery pack may further include a cooling member coupled to at least one surface of the battery cell.

At least some of the above and other features of the invention are set out in the claims.

### BRIEF DESCRIPTION OF DRAWINGS

FIG. 1 is a perspective view of a battery pack according to an embodiment of the present disclosure.
FIG. 2 is an exploded perspective view of the battery pack according to an embodiment of the present disclosure.
FIG. 3A is a cross-sectional view of the battery pack according to an embodiment of the present disclosure.
FIG. 3B is a bottom view showing a lower cover of the battery pack according to an embodiment of the present disclosure.
FIG. 4 is a conceptual diagram showing a path through which heat is emitted from the battery pack according to an embodiment of the present disclosure.
FIG. 5 is a graph showing a degree of heat propagation to neighboring cells when an event occurs in the battery pack according to an embodiment of the present disclosure.
FIG. 6 is a perspective view of a battery pack according to an embodiment of the present disclosure.
FIG. 7 is an exploded perspective view of the battery pack of FIG. 6.
FIG. 8 is a graph showing a degree of heat propagation to neighboring cells when an event occurs in the battery pack of FIG. 6.

### DETAILED DESCRIPTION

Herein, some embodiments of the present invention will be described in further detail with reference to the accompanying drawings.

Some embodiments of the present disclosure are provided to more fully describe the present disclosure to those skilled in the art; however, the following embodiments may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components may be exaggerated for brevity and clarity. Like numbers refer to like elements throughout. As used herein, the term "and/or" includes any and all combinations of one or more of the associated listed items. In addition, it is to be understood that when an element A is referred to as being "connected to" an element B, the element A may be directly connected to the element B or one or more intervening elements C may be present therebetween such that the element A and the element B are indirectly connected to each other.

The terminology used herein is for the purpose of describing particular embodiments and is not intended to be limiting of the disclosure. As used herein, the singular forms are intended to include the plural forms as well, unless the context clearly indicates otherwise. It is to be further understood that the terms "comprise" or "include" and/or "comprising" or "including," when used in this specification, specify the presence of stated features, numbers, steps, operations, elements, and/or components, but do not preclude the presence or addition of one or more other features, numbers, steps, operations, elements, components, and/or groups thereof.

It is to be understood that, although the terms "first," "second," etc. may be used herein to describe various members, elements, regions, layers, and/or sections, these members, elements, regions, layers, and/or sections should not be limited by these terms. These terms are used to distinguish one member, element, region, layer, and/or section from another. Thus, for example, a first member, a first element, a first region, a first layer, and/or a first section discussed below could be termed a second member, a second element, a second region, a second layer, and/or a second section without departing from the teachings of the present invention.

Spatially relative terms, such as "beneath," "below," "lower," "above," "upper," and the like, may be used herein for ease of description to describe one element or feature's relationship to another element(s) or feature(s), referring to the figures. It is to be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the example term "below" may encompass both an orientation of above and below.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

Herein, the configuration of a battery pack according to an embodiment of the present disclosure will be described.

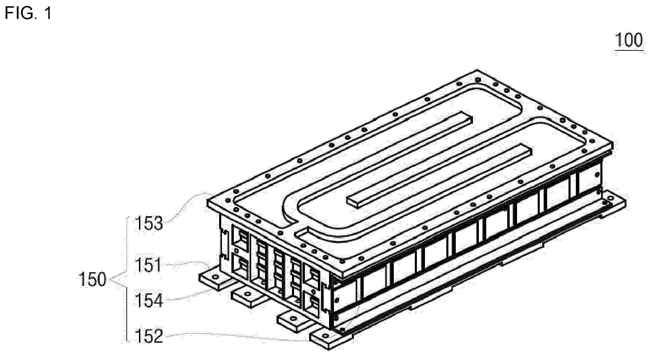

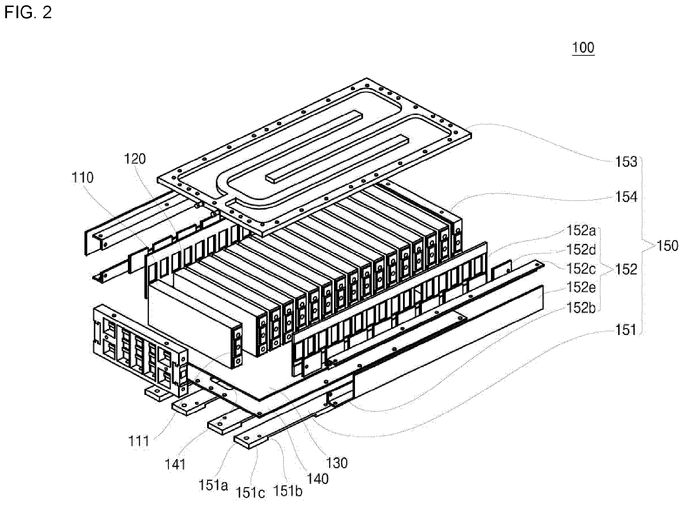

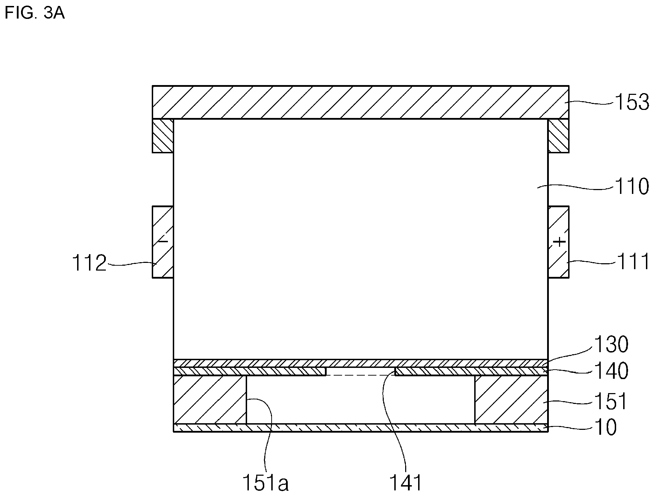

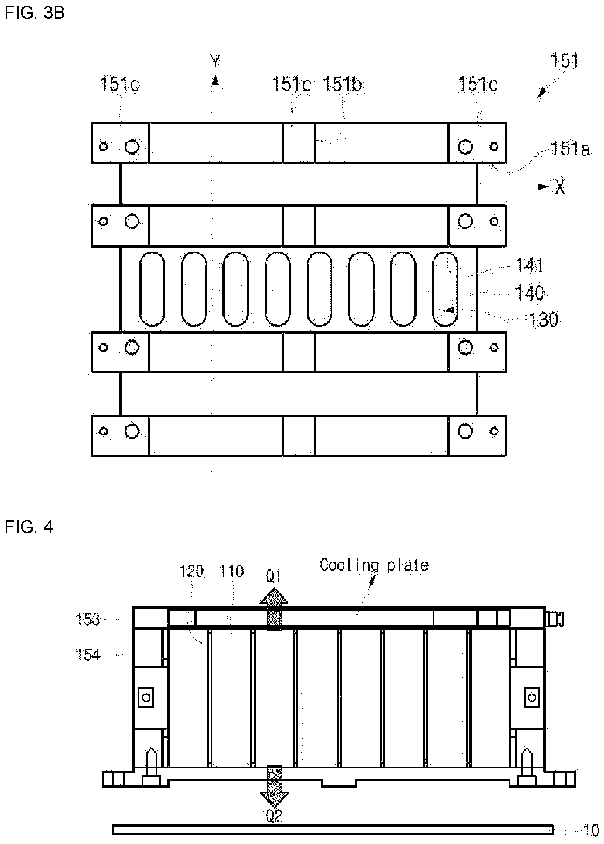

FIG. 1 is a perspective view of a battery pack according to an embodiment of the present disclosure. FIG. 2 is an exploded perspective view of the battery pack according to an embodiment of the present disclosure. FIG. 3A is a cross-sectional view of the battery pack according to an embodiment of the present disclosure. FIG. 3B is a bottom view showing a lower cover of the battery pack according to an embodiment of the present disclosure.

Referring to FIGS. 1 to 3B, the battery pack 100 according to an embodiment of the present disclosure may include a plurality of battery cells 110, a spacer 120 located between the battery cells 110, a heat shielding member 130 formed on a lower surface of the battery cells 110, a rigid member 140 formed on a lower surface of the heat shielding member 130, and a cover member 150 coupled while around (e.g., surrounding) the outer surface of the battery cells 110.

Each of the battery cells 110 may include an electrode assembly. The electrode assembly is formed by stacking or winding a laminate of a first electrode plate, a separator, and a second electrode plate, which are shaped of a thin plate or film. In an embodiment, the first electrode plate may operate as a negative electrode, and the second electrode plate may operate as a positive electrode.

The first electrode plate is formed by applying a first electrode active material, such as graphite or carbon, to a first electrode current collector formed of a metal foil, such as copper or nickel, and includes a first electrode uncoated portion that is a region to which the first electrode active material is not applied. The first electrode uncoated portion provides a path for current flow between the first electrode plate and the outside.

The second electrode plate is formed by applying a second electrode active material, such as a transition metal oxide, to a second electrode current collector formed of a metal foil, such as aluminium, and includes a second electrode uncoated portion that is a region to which the second electrode active material is not applied.

The separator is located between the first and second electrode plates and prevents or substantially prevents short circuits and enables the movement of lithium ions. In an embodiment, the separator may be made of polyethylene, polypropylene, or a composite film of polyethylene and polypropylene.

In addition, the electrode assembly may be stored in a case together with an electrolyte. The electrolyte may include a lithium salt, such as LiPF₆ or LiBF₄, dissolved in an organic solvent, such as ethylene carbonate (EC), propylene carbonate (PC), diethyl carbonate (DEC), ethyl methyl carbonate (EMC), or dimethyl carbonate (DMC).

In addition, the case may be sealed by a cap plate or a side plate. FIG. 1 shows an example in which the case is sealed by a side plate, and electrode terminals 111 and 112 coupled to the first and second electrode plates are formed on both sides of the side plate. These electrode terminals 111 and 112 may be formed to protrude from both sides of the case.

For example, the battery cell 110 may have a vent formed on the lower surface thereof. In an embodiment, the vent is formed to be thinner than other areas, and, thus, when the internal pressure of the battery cell 110 is higher than a reference pressure, the vent may be opened earlier than other areas. Accordingly, the vent may induce the internal gas of the battery cell 110 to be discharged to the outside in advance at a pressure higher than the reference pressure, thereby preventing or substantially preventing accidents, such as explosions, from occurring. In particular, in the battery pack 100, when structures such as bus bars for electrical connection of the battery pack are formed on the lateral or upper portion, by forming the vent on the lower surface of the battery cell 110, the structures may not be affected even if the vent of the battery cell 110 is opened.

The spacer 120 may be disposed between the battery cells 110. The spacer 120 allows neighboring battery cells 110 to be electrically independent from each other and may block heat from the battery cells 110 from propagating to neighboring battery cells 110. The spacer 120 may be an insulating sheet, and may be made of, for example, ceramic paper.

The heat shielding member 130 may be formed on the lower surface of the battery cell 110. The heat shielding member 130 may be formed on the lower surface of the battery cell 110, where a vent is formed. When the vent is opened in a specific battery cell 110 among the battery cells 110, a high-temperature discharge material may be discharged from the inside of the battery cell 110. If this discharge material scatters and flies to the neighboring battery cell 110 or settles in the vent of a particularly vulnerable neighboring battery cell 110, the vent of the neighboring battery cell 110 may be opened. Therefore, due to the event occurring in the specific battery cell 110, a problem may occur in which the event is propagated to the neighboring battery cell 110. In an embodiment, the heat shielding member 130 is formed outside the surface of the battery cell 110 where the vent is formed, such that when the discharge material flies, the discharge material may be prevented or substantially prevented from directly contacting the neighboring battery cell 110. In particular, since the heat shielding member 130 is formed on the outer surface to cover the vent of the battery cell 110, relatively more vulnerable vents can be protected from the discharge material.

While blocking the heat of the scattered discharge material from being transferred to the neighboring battery cell 110, the heat shielding member 130 may be opened along with the opening of the vent when the vent operates due to internal pressure in the corresponding battery cell 110 when the vent operates due to internal pressure in the battery cell 110. Accordingly, the heat shielding member 130 may protect the neighboring battery cell 110 from the discharge material but may not interfere with the operation of the vent. To this end, the heat shielding member 130 may be configured to include, for example, mica.

The rigid member 140 may be formed on the outer surface of the heat shielding member 130. The rigid member 140 may provide mechanical rigidity to the outer surface of the heat shielding member 130. The rigid member 140 may prevent or substantially prevent the battery cell 110 from melting or rupturing.

In addition, in the rigid member 140, an opening hole 141 is formed in an area that corresponds to the vent of the battery cell 110. Accordingly, the vent may not be interfered by the opening hole 141 of the rigid member 140, and, thus, the operation of the vent of the battery cell 110 may not be interrupted.

In an embodiment, the rigid member 140 opens only an area corresponding to the vent of the battery cell 110, and, thus, when a vent is formed on the lower surface of the battery cell 110, the electrode assembly may not be downwardly separated even if the vent is opened. Accordingly, the rigid member 140 can prevent or substantially prevent the electrode assembly in high temperature from being separated due to the occurrence of an event, thereby preventing or substantially preventing heat propagation.

The cover member 150 may surround the battery cells 110 to protect the battery cells 110 from external shock. In an embodiment, the cover member 150 may include a support member 151 formed on a lower portion of the battery cell 110, a side cover member 152 formed along a lateral side of the battery cell 110, a cooling member 153 formed on an upper portion of the battery cell 110, and an end cover member 154 coupled to front and rear ends where the battery cells 110 are arranged.

The support member 151 may be formed along a surface, for example, the lower surface, on which the plurality of battery cells 110 are arranged. In an embodiment, the support member 151 is coupled at the lower portion of the battery cell 110, the heat shielding member 130 coupled thereto, and the outer surface of the rigid member 140, and can support the loads thereof. The support member 151 may perform the function of discharging the heat generated in the battery cells 110 through the lower surface of the battery pack 100.

In an embodiment, the support member 151 may include a flow path on a lower surface to allow air to flow. For example, the support member 151 may include a plurality of first flow paths 151a formed in a first direction and a plurality of second flow paths 151b formed in a second direction perpendicular to the first direction. For example, the first flow paths 151a may be configured through gaps between a plurality of support members 151, and the second flow paths 151b may be configured by partially cutting walls of the support members 151. In the areas of the second flow paths 151b, the areas where the partial cutting has not been performed may form bridges 151c, and, by the configuration of the bridges 151c, the battery cell 110, the heat shielding member 130, and the rigid member 140 disposed thereon can be supported. In addition, the areas where the first flow paths 151a and the second flow paths 151b meet may intersect in a cross shape, and, thus, the air located within the areas can move along any of the first flow paths 151a or the second flow paths 151b. Therefore, when an event occurs in a specific battery cell 110, the vent on the lower surface of the battery cell 110 is opened and the gas that reaches the support member 151 naturally moves along the first flow paths 151a or the second flow paths 151b to then be easily discharged to the outside of the battery pack 100.

The side cover member 152 may be coupled to both sides of the battery cell 110 in the upper area of the support member 151. The side cover member 152 protects the battery cells 110 through this configuration and enables electrical connection of the battery cells 110.

In an embodiment, the side cover member 152 may include a side frame 152a formed on both sides along the direction in which the battery cells 110 are arranged, a lower coupling frame 152b coupled to the lower part of the side frame 152a and coupled to the rigid member 140 and the support member 150, an upper coupling frame 152c coupled to the upper part of the side frame 152a and coupled to the cooling member 153, a plurality of bus bars 152d coupled to a side of the side frame 152a and electrically connecting the electrode terminals 111 of the battery cells 110 exposed through the side frame 152a, and an insulating cover 152e coupled from the outside of the bus bars 152d and around (e.g., surrounding) the bus bars 152d.

The cooling member 153 is coupled to the side cover member 152 and may be formed on the upper surface of the battery cells 110. In an embodiment, for example, the cooling member 153 is in contact with the battery cells 110 and may radiate heat from the battery cells 110 through a coolant. However, an air cooling method rather than a water cooling method may be adopted as the cooling method of the cooling member 153, and, in this case, heat dissipation fins may be provided.

The end cover member 154 may be coupled to the front and rear ends where the battery cells 110 are arranged. The end cover member 154 is coupled to the support member 151, the side cover member 152, and the cooling member 153, and thus may accommodate the battery cells 110 in the internal space.

As described above, in the battery pack 100 according to an embodiment of the present disclosure, a heat shielding member 130 and a rigid member 140 are sequentially formed on the surface of the battery cell 110 where the vent is formed, and an opening hole 141 is provided in the rigid member 140. Accordingly, while protecting the neighboring battery cell 110 from the discharge material generated when an event occurs in a specific battery cell 110, the vent operation of the battery cell 110 may not be affected.

In addition, the battery pack 100 according to an embodiment of the present disclosure may include the support member 151 of the cover members 150, which is formed at the lower portion of the battery cell 110, and includes the first flow path 151a and the second flow path 151b on the support member 151 so as to intersect each other, such that the gas generated by the vent operation of the battery cell 110 may be easily discharged to the outside along the flow paths 151a and 151b.

Herein, an effect of the battery pack according to an embodiment of the present disclosure will be described in further detail.

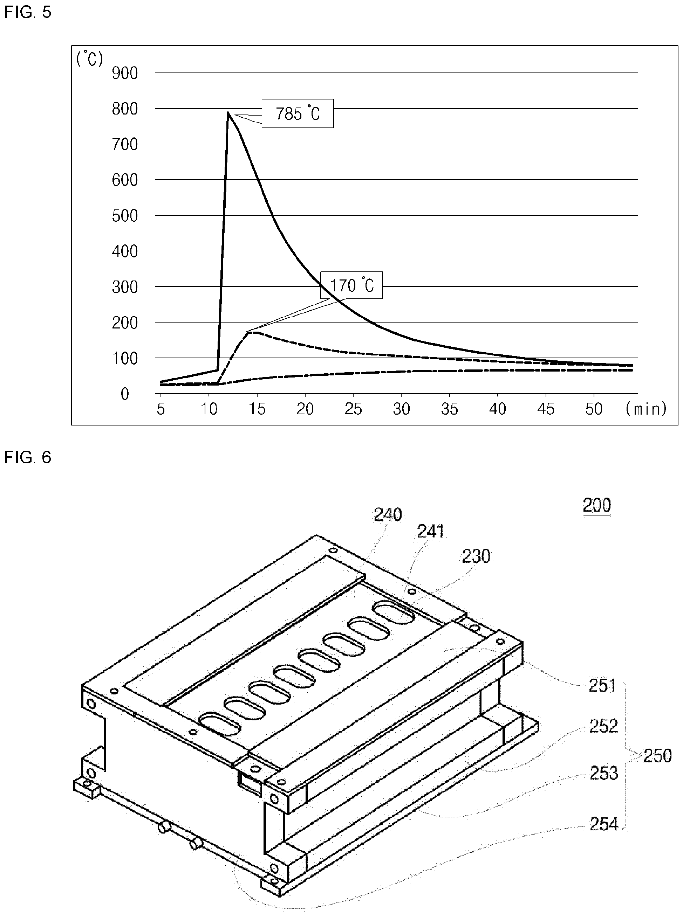

FIG. 4 is a conceptual diagram showing a path through which heat is emitted from the battery pack according to an embodiment of the present disclosure. FIG. 5 is a graph showing a degree of heat propagation to neighboring cells when an event occurs in the battery pack according to an embodiment of the present disclosure.

As shown in FIG. 4, the battery cell 110 is disposed between the upper cooling member 153 and the lower support member 151. In addition, since the spacer 120 is disposed between the battery cells 110, the respective battery cells 110 may be thermally independent as much as possible. In this state, in a specific battery cell 110, when heat is generated in a specific battery cell 110 for reasons such as an event or during operation, the heat may move through paths indicated by Q1 and Q2, respectively. Therefore, the heat generated in the high-temperature battery cell 110 is dissipated through the cooling member 153, or may escape by moving through the flow path formed in a space between the support member 151 and a separate cover 10, etc. Therefore, the heat of the high temperature battery cell 110 may not be transferred to a neighboring battery cell 110 as much as possible.

Referring to FIG. 5, when an event occurs in a specific battery cell 110 at a specific time (about 10 minutes), thermal propagation to neighboring battery cells 110 can be confirmed. First, as confirmed by the graph indicated by a solid line, when an event occurs in the specific battery cell 110, it can be seen that the temperature of the battery cell 110 increases to about 785 °C. However, as confirmed from the graph indicated by a dotted line, it can be seen that the temperature of the neighboring battery cell 110 of the corresponding (the specific) battery cell 110 increases, but only rises to 170 °C and returns to normal. In addition, the remaining battery cells 110 that are not adjacent to the corresponding battery cell 110 may not be affected and maintain a normal state, as shown in the graph indicated by a double-dash line. Therefore, even if an event occurs in the specific battery cell 110, it can be seen that thermal propagation to neighboring battery cells 110 is minimized or reduced.

Herein, the configuration of a battery pack according to another embodiment of the present disclosure will be described.

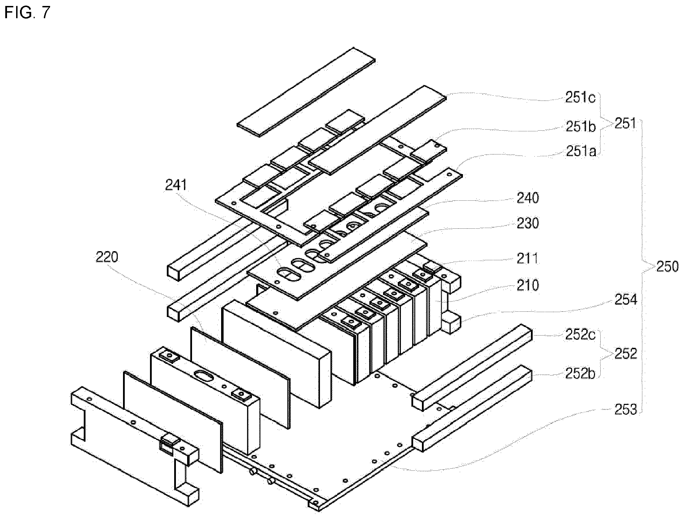

FIG. 6 is a perspective view of a battery pack according to an embodiment of the present disclosure. FIG. 7 is an exploded perspective view of the battery pack of FIG. 6.

Referring to FIG. 6, a battery pack according to an embodiment of the present disclosure may include a plurality of battery cells 210, a spacer 220 located between the battery cells 210, a heat shielding member 230 formed on an upper surface of the battery cells 210, a rigid member 240 formed on an upper surface of the heat shielding member 230, and a cover member 250 coupled to surround an outer surface of the battery cells 210. Structures similar to those of the previously described embodiments are given similar reference numerals, and the following description will focus on differences therebetween.

The battery cell 210 may have electrode terminals 211 formed on an upper surface thereof. In an embodiment, a vent is formed between the electrode terminals 211, and a plurality of vents may be provided and arranged in a row.

In addition, the spacer 220 may be disposed between the battery cells 210 to electrically and thermally separate the battery cells 210 from one another.

The heat shielding member 230 may be formed on the upper surface of the battery cell 210 where the vent is formed. The heat shielding member 230 may be formed to correspond to a central area of the battery cell 210, excluding the electrode terminals 211, and may be formed to cover at least the vent. Accordingly, the vent of the battery cell 210 may not be exposed to the outside by the heat shielding member 230.

In addition, the rigid member 240 may be formed on the upper surface of the heat shielding member 230. The rigid member 240 has an opening hole 241 at a position corresponding to the vent of the battery cell 210, and may not affect the operation of the vent of the battery cell 210.

In an embodiment, the cover member 250 may include an upper cover member 251 formed on an upper portion of the battery cell 210, a side cover member 252 formed along a lateral side of the battery cell 210, a cooling member 253 formed on a lower portion of the battery cell 210, and an end cover member 254 coupled to front and rear ends where the battery cells 210 are arranged.

In an embodiment, the upper cover member 251 may include an upper frame 251a formed on the upper portion of the battery cell 210, a bus bar 251b coupled to the electrode terminal 211 of the battery cell 210 exposed to the outside of the upper frame 251a, and an insulating cover 251c around (e.g., surrounding) the bus bar 251b on the outside of the bus bar 251b.

The side cover member 252 may be coupled to the upper cover member 251 and the lower cooling member 253 through two cover members 252b and 252c formed on upper and lower sides of the battery cell 210, respectively.

The cooling member 253 may be formed at the lower portion of the battery cell 210. The cooling member 253 extends along the lower portion where the battery cells 210 are arranged, and may cool the battery cell 210.

The end cover member 254 is coupled to the front and rear ends of the battery cells 210. The end cover member 254 is combined with the upper cover member 251, the side cover member 252, and the cooling member 253, thereby accommodating the battery cells 210 in an internal space.

In addition, in the battery pack 200 according to an embodiment of the present disclosure, a separate duct structure with respect to the external housing of the pack may be further formed, and by the duct structure, gas or heat generated by an event of the battery cell 210 may be easily exhausted to the outside. In an embodiment, similar to the previous embodiment, for such an external housing, the gas or heat may be easily discharged to the outside by forming flow paths in at least two directions.

As described above, the battery pack 200 according to an embodiment of the present disclosure includes, with respect to the upper surface where the electrode terminals 211 of the battery cell 210 and the vent are formed, the heat shielding member 230 and the rigid member 240, and thus may not affect the operation of the vent while protecting neighboring battery cells 210 from a discharge material of the battery cell 210 where an event occurs.

Herein, an effect of the battery pack according to the embodiment of FIG. 6 will be described.

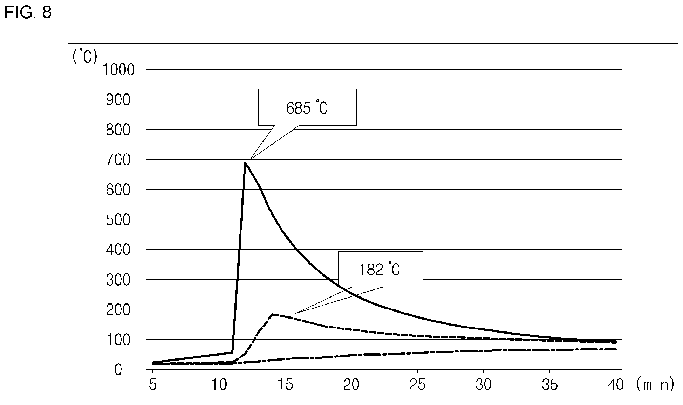

FIG. 8 is a graph showing a degree of heat propagation to neighboring cells when an event occurs in the battery pack according to an embodiment of the present disclosure.

Referring to FIG. 8, when an event occurs in a specific battery cell 210 at a specific time (about 10 minutes), thermal propagation to neighboring battery cells 210 can be confirmed. First, as confirmed by the graph indicated by a solid line, when an event occurs in the specific battery cell 210, it can be seen that the temperature of the battery cell 210 increases to about 685 °C. However, as confirmed from the graph indicated by a dotted line, it can be seen that the temperature of the neighboring battery cell 210 of the corresponding (or specific) battery cell 210 increases, but only rises to 182 °C and returns to normal. In addition, the remaining battery cells 210 that are not adjacent to the corresponding battery cell 210 may not be affected and maintain a normal state, as shown in the graph indicated by a double-dash line. Therefore, even if an event occurs in the specific battery cell 210, it can be seen that thermal propagation to neighboring battery cells 210 is minimized or reduced.

As described above, in the battery pack according to one or more embodiments of the present disclosure, a heat shielding member and a rigid member are sequentially formed on a surface of a battery cell where a vent is formed, and opening holes are provided in the rigid member, thereby protecting neighboring battery cells from a discharge material when an event occurs in a specific battery cell while not affecting a vent operation of the battery cell.

In addition, the battery pack according to one or more embodiments of the present disclosure may include a support member formed at a lower portion of the battery cell in the cover member and has a first flow path and a second flow path provided in the support member so as to intersect each other, thereby allowing a gas generated due to the vent operation of the battery cell to be easily discharged to the outside along the flow paths.

While some embodiments for carrying out the present disclosure have been described herein, the present disclosure is not limited to these embodiments, and it will be understood by a person skilled in the art that various changes in form and details may be made therein without departing from the scope of the present disclosure as set forth by the following claims.

## Claims

1. A battery pack comprising:
a plurality of battery cells;
a heat shielding member covering a side of a battery cell of the plurality of battery cells where a vent is formed; and
a rigid member coupled to an outer surface of the heat shielding member,
wherein the rigid member comprises an opening hole corresponding to the vent.

2. The battery pack as claimed in claim 1, wherein the heat shielding member is exposed to an outside through the opening hole of the rigid member.

3. The battery pack as claimed in claim 1 or claim 2, further comprising a support member or a housing corresponding to a surface of the battery cell where the vent is formed, and a flow path is defined inside the support member or the housing.

4. The battery pack as claimed in claim 3, wherein the support member comprises steps inside to define the flow path.

5. The battery pack as claimed in claim 3 or claim 4, wherein the flow path is defined along at least two directions.

6. The battery pack as claimed in claim 5, wherein the flow path comprises a first flow path and a second flow path perpendicular to each other.

7. The battery pack as claimed in any one of claims 1 to 6, wherein the heat shielding member comprises mica.

8. The battery pack as claimed in any one of claims 1 to 7, wherein the rigid member comprises steel or aluminium.

9. The battery pack as claimed in any one of claims 1 to 8, further comprising:
a plurality of bus bars coupling electrode terminals of the battery cells; and
an insulating cover covering the bus bars at an outside of the bus bars.

10. The battery pack as claimed in any one of claims 1 to 9, further comprising a cooling member coupled to at least one surface of the battery cell.
